(19) Europäisches Patentamt
European Patent Office
Office européen des brevets

(11) Veröffentlichungsnummer: **0 115 829**
**B1**

(12) # EUROPÄISCHE PATENTSCHRIFT

(45) Veröffentlichungstag der Patentschrift: **01.06.88**

(51) Int. Cl.⁴: **B 32 B 17/10**, C 03 C 27/12, C 08 J 5/18, C 08 K 5/00, C 08 L 29/14

(21) Anmeldenummer: **84100856.8**

(22) Anmeldetag: **27.01.84**

(54) **Weichmacherhaltige Polyvinylbutyralfolien mit reduziertem Haftvermögen an Glas.**

(30) Priorität: **31.01.83 DE 3303156**

(43) Veröffentlichungstag der Anmeldung: **15.08.84 Patentblatt 84/33**

(45) Bekanntmachung des Hinweises auf die Patenterteilung: **01.06.88 Patentblatt 88/22**

(84) Benannte Vertragsstaaten: **DE FR GB IT**

(56) Entgegenhaltungen:
**DE - A - 2 646 280**
**DE - A - 2 732 717**
**FR - A - 1 452 913**
**GB - A - 1 151 349**

(73) Patentinhaber: **HOECHST AKTIENGESELLSCHAFT, Postfach 80 03 20, D-6230 Frankfurt am Main 80 (DE)**

(72) Erfinder: **Hermann, Hans Dieter, Dr., Am Dachsbau 7, D-6232 Bad Soden am Taunus (DE)**
Erfinder: **Fabian, Klaus, Drosselweg 11, D-6239 Kriftel (DE)**
Erfinder: **Ebigt, Joachim, Dr., Frauenlobstrasse 76a, D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Verbundglas besteht aus zwei oder mehr Glasscheiben, die durch Kunststoff-Folien zusammengehalten werden. Die Zwischenschicht aus Kunststoff sorgt dafür, dass die Verbundscheibe bei einem Aufprall nicht durchgeschlagen wird und dass dabei keine Glassplitter wegfliegen.

Damit die Folie diese Aufgabe erfüllen kann, muss sie eine ganz definierte Haftung am Glas besitzen. Ist diese Haftung zu hoch, so löst sich das Glas bei Schlageinwirkungen überhaupt nicht von der Folie, statt dessen wird die Folie am Glassprung sofort überdehnt und reisst. Ist die Haftung zu niedrig, so lösen sich Glassplitter von der Scheibe. Nur bei richtiger Glashaftung löst sich die Folie geringfügig am Glassprung, so dass sie nicht überdehnt werden und den Stoss elastisch auffangen kann, ohne dass Glassplitter aus dem Verbund wegfliegen.

Weichmacherhaltige Polyvinylbutyralfolien haben sich seit langem als Zwischenschicht für Verbundglas bewährt. Es ist bekannt, die Haftung von Polyvinylbutyral an Glas, die normalerweise zu hoch ist, definiert herabzusetzen. Am einfachsten geschieht das durch Zusatz von Wasser. Bei stark haftenden Folien muss aber der Wassergehalt so hoch liegen (> 0,8 Gew.-%), dass dies zur Blasenbildung im Verbund führen kann.

Weiterhin ist die Einstellung der Glashaftung durch Zusatz verschiedener Alkali-, Erdalkali und anderer Metallsalze bekannt. Bewährt haben sich insbesondere alkalisch reagierende Kaliumverbindungen, wie Kaliumhydroxid und Kaliumacetat oder Kaliumsalze, wie sie z.B. in der DE-PS 1 289 261 zum Herabsetzen der Glashaftung beschrieben sind. Gute Antihaftmittel sind ferner Betaine, wie sie z.B. in der DE-OS 2 646 280 beschrieben sind, sowie andere Verbindungen mit Betainstruktur.

Die genannten Verbindungen sind teilweise hervorragend geeignet, die Glashaftung von weichgemachten Polyvinylbutyralfolien gezielt herabzusetzen und damit die Durchschlagfestigkeit von Glasverbunden aus diesen Folien zu erhöhen.

Schwierigkeiten können sich aber dann ergeben, wenn als Polyvinylbutyral ein Polymerisat verwendet wird, welches 21 Gew.-% und mehr Vinylalkoholeinheiten im Polymeren eingebaut enthält. Weichgemachte Folien aus solchen Polymerisaten haben eine sehr hohe Festigkeit und sind deshalb besonders interessant. Ein wesentlicher Nachteil dieser Folien ist jedoch die aussergewöhnlich hohe Haftung an Glas. Um eine optimale Glashaftung zu erreichen, benötigt man hohe Antihaftmittelkonzentrationen, die z.B. im Fall der Kaliumsalze weit über die in der DE-PS 1 289 261 beschriebenen Mengenanteile hinausgehen, was zur Verfärbung der Folien und zur Beeinträchtigung der zwischenmolekularen Kräfte im Polymerisat und damit der Festigkeit führt. Der Effekt, den man durch Anheben des Vinylalkoholanteils im Polymerisat erreicht hat, geht damit durch den Zusatz von Kaliumsalzen wieder verloren.

Betaine als Antihaftmittel haben diese Nachteile nicht, aber auch sie müssen in relativ hohen Konzentrationen eingesetzt werden. In Gegenwart hoher Betainmengen erhält man aber häufig eine Abhängigkeit der Glashaftung von den Verarbeitungsbedingungen, d.h., die erzielte Glashaftung ist unter scharfen Verarbeitungsbedingungen, z.B. bei Extrusionstemperaturen von über 210 °C, höher als unter milden Verarbeitungsbedingungen, z.B. bei Extrusionstemperaturen von 170 °C. Das beeinträchtigt die Reproduzierbarkeit der Haftungseinstellung.

Überraschenderweise wurde nun gefunden, dass sich die Haftung der Folien an Glas reproduzierbar und ohne Beeinträchtigung der Farbe und der Festigkeit der Folien auf die erforderliche Grösse einstellen lässt, wenn man eine Kombination aus Kaliumhydroxid, Kaliumformiat oder Kaliumacetat und Betainen als Antihaftmittel einsetzt.

Gegenstand der Erfindung ist daher ein Verfahren zur Reduzierung der Glashaftung von thermoplastischen, weichmacherhaltigen Polyvinylbutyralformmassen, insbesondere Folien, deren Polyvinylbutyralkomponente vorzugsweise 21–28 Gew.-% Vinylalkoholeinheiten (bezogen auf Polyvinylbutyral) enthält, durch Vermischen der Formmassenbestandteile mit einem Antihaftmittel aus der Gruppe alkalische Metallverbindungen und Betaine, dadurch gekennzeichnet, dass man als Antihaftmittel eine Kombination aus

a) Kaliumhydroxid, Kaliumformiat oder Kaliumacetat in einer Menge entsprechend einem Alkalititer zwischen 10 und 200 (bezogen auf Polyvinylbutyral) und

b) 0,005 bis 0,5 Gew.-% (bezogen auf Polyvinylbutyral) einer Verbindung mit Betainstruktur, vorzugsweise eines Betains, Sulfobetains, Phosphobetains oder eines Gemisches aus diesen Verbindungen, einsetzt.

Der Alkalititer ist dabei definiert als die Anzahl Milliliter 0,01n Salzsäure, die erforderlich ist, um 100 g Polyvinylbutyral, welches mit einer entsprechenden Menge an Kaliumhydroxid, Kaliumformiat oder Kaliumacetat vermischt worden ist, zu neutralisieren. Dazu wird das Gemisch aus Polymerisat und alkalischer Metallverbindung in äthanolischer Lösung mit 0,01n Salzsäure und Bromphenolblau als Indikator titriert. Der bevorzugte Bereich des Alkalititers liegt bei 20–150, insbesondere zwischen 30 und 100. Bei alleiniger Anwendung als Antihaftmittel anstelle der beanspruchten Kombination sind die oben unter a) angegebenen Mengen an alkalischer Metallverbindung im allgemeinen unzureichend, um die Glashaftung von weichmacherhaltigen Polyvinylbutyralfolien mit einem hohen Anteil des Polyvinylbutyrals an Vinylalkoholeinheiten auf einen optimalen Wert herabzusetzen.

Als Betaine können prinzipiell alle organischen Verbindungen eingesetzt werden, die neben einer quartären Ammoniumgruppe eine Carboxylat-, Sulfonat-, Phosphonat- bzw. Phosphatgruppe enthalten. Als solche sind beispielsweise die in der DE-OS 2 646 280 beschriebenen Betaine und Sulfobetaine geeignet, ferner sind insbesondere Betaine mit oberflächenaktiven Eigenschaften geeignet, die einen langkettigen aliphatischen Rest mit 8–30 Kohlenstoffatomen besitzen. Schliesslich zeigen auch Betaine mit Phosphonsäure- bzw. Phosphorsäuregruppen, wie z.B. Lecithin, eine gute Wirksamkeit in der erfindungsgemässen Kombination.

Als Beispiele für wirksame Betaine seien genannt:

$(CH_3)_3-N^+-(CH_2)_n-COO^-$ , $n = 1–30$

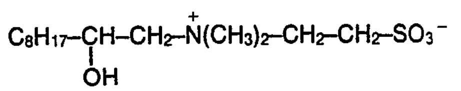

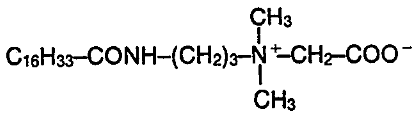

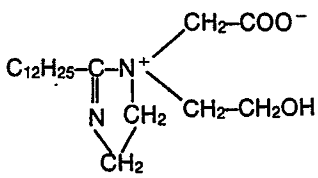

Die Konzentration der Betaine kann zwischen 0,005 und 0,5 Gew.-%, bezogen auf Polyvinylbutyral, liegen. Vorzugsweise werden Konzentrationen zwischen 0,01 und 0,3 Gew.-% eingesetzt.

Die Anwendung der Kombination aus Kaliumverbindung und Betain erlaubt es, die Glashaftung prinzipiell aller üblichen Polyvinylbutyralfolien herabzusetzen und auf optimale Gebrauchswerte einzustellen. Erfindungsgemäss wird die beanspruchte Antihaftmittelkombination aber vorzugsweise bei hochfesten weichmacherhaltigen Polymerisaten mit einem Anteil an Polyvinylalkoholeinheiten im Polyvinylbutyral von 21–28 Gew.-% eingesetzt. In diesem Bereich war es bisher nicht möglich, die Haftung des weichgemachten Polymerisats an Glas optimal und reproduzierbar zu vermindern, ohne dass die resultierende Folie sich verfärbte und in ihrer Festigkeit beeinträchtigt wurde.

Da diese Schwierigkeiten nun erfindungsgemäss überwunden werden können, ist es möglich, entweder Glasverbunde mit gesteigerter und bisher nicht erreichter mittlerer Bruchhöhe herzustellen, oder, bei Einstellung der Bruchhöhe auf den Stand der Technik, die Foliendicke oder die Dicke des Glases zu vermindern.

Die Antihaftmittel können auf beliebige Weise vor oder während der Verarbeitung mit dem Polymerisat bzw. dem Polymerisat/Weichmachergemisch vermischt werden. So kann z.B. das Antihaftmittelsystem aus Lösung, vorzugsweise aus wässriger Lösung, auf das Polymerisat aufgetrocknet werden, d.h., die Lösung wird in dem Polymerisat verteilt und das Wasser anschliessend durch Verdunstung entfernt. Etwas weniger günstig ist das Einmischen des trockenen und gepulverten Antihaftmittels in das Polymerisatpulver. Vorteilhaft kann auch das Zudosieren einer wässrigen oder organischen, vorzugsweise alkoholischen Antihaftmittellösung bei der Extrusion sein. Günstig ist es auch, das Antihaftmittelsystem in gelöster Form, z.h. in Methanol, zum Weichmacher zu geben oder, bei Verwendung von oberflächenaktiven Betainen (siehe oben), es in wässriger Verteilung im Weichmacher zu emulgieren. Über die Art der Einmischung sollte daher, je nach Löslichkeit der Antihaftmittelkomponente, von Fall zu Fall entschieden werden. Überschüssiges Wasser oder Lösungsmittel können bei der Verarbeitung durch Verdampfen wieder entfernt werden.

Die verwendeten Polyvinylbutyrale können auf beliebige bekannte Weise hergestellt werden, z.B. nach dem Verfahren der DE-PS 2 732 717. Zur Herstellung hochfester Folien, deren Glashaftung optimal einzustellen besonders problematisch ist, sind Polyvinylbutyrale mit einem Anteil von vorzugsweise 21–28 Gew.-% an Vinylalkoholeinheiten und gegebenenfalls vorzugsweise bis zu 5 Gew.-%, insbesondere bis zu 3 Gew.-%, an Vinylacetateinheiten besonders geeignet. Besonders bevorzugt sind Polyvinylbutyrale, deren Vinylalkoholanteil zwischen 22 und 26 Gew.-% liegt.

Die Viskosität der zu verwendenden Polymerisate liegt im üblichen Bereich. Geeignet sind insbesondere Polyvinylbutyrale, deren Viskosität in 5%iger äthanolischer Lösung bei 23 °C zwischen 30 und 200 mPas liegt (gemessen nach DIN 53015).

Die verwendeten Weichmacherkomponenten sind die nach dem Stand der Technik bekannten. Vorzugsweise werden solche Weichmacher verwendet, die mit den erfindungsgemäss einzusetzenden Polymerisaten unter den einzuhaltenden Bedingungen verträglich sind. So können für Polymerisate mit bis zu ca. 21–22 Gew.-% eingebaute Vinylalkoholeinheiten z.B. Ester des Di-, Tri- und Tetraethylenglykols mit aliphatischen linearen oder verzweigten Carbonsäuren mit 5–10 Kohlenstoffatomen oder auch Ester der Phthalsäure mit Alkoholen von 4–10 Kohlenstoffatomen verwendet werden. Bei Polymerisaten mit höherem Anteil an Vinylalkoholeinheiten reicht die Verträglichkeit dieser Weichmacher oft nicht aus.

In diesem Fall können die genannten Phthalsäureester in Mischung mit Phosphorsäureestern eingesetzt werden, wobei so viel Phosphorsäureester im Gemisch verwendet wird, dass die gewünschte Verträglichkeit erreicht wird. Darüber hinaus wurde bereits auch vorgeschlagen, Mischungen aus Glykolester und Phosphorsäureestern als Weichmacher zu verwenden.

Neben diesen besonders bevorzugten Weichmachern können auch andere Weichmacher, wie z.B. Adipinsäure- und Sebazinsäureester sowie Phosphorsäureester allein oder in Abmischung verwendet werden.

Die Konzentration an Weichmacher im Polymerisat/Weichmachergemisch kann zwischen 20 und 40 Gew.-% liegen, vorzugsweise zwischen 25 und 35 Gew.-%. Besonders bevorzugt sind Weichmacherkonzentrationen von 27–32 Gew.-%. Bei zu niedrigen Weichmacherkonzentrationen kann die

Verarbeitbarkeit der Gemische beeinträchtigt werden, bei zu hoher Weichmacherkonzentration wird die erforderliche Folienfestigkeit nicht mehr erreicht.

Das Polymerisat/Weichmachergemisch kann neben den beanspruchten Antihaftmitteln auch weitere übliche Zusätze, wie z.B. Stabilisatoren und Antiblockmittel in üblichen Konzentrationen zwischen 0,01 und 1 Gew.-%, bezogen auf das Gemisch, enthalten.

Polymerisat, Weichmacher und Zusätze können in bekannter Weise auf einem Kalander oder in einem Extruder zu vorzugsweise 0,3–1,5 mm starken Folien verarbeitet werden.

Die fertige Glasverbundfolie wird, gegebenenfalls nach Klimatisierung, die erforderlich ist, um den Wassergehalt der Folie auf ca. 0,2–0,8 Gew.-% einzustellen, in üblicher Weise mit Glasscheiben zum Verbund verarbeitet. Die Einstellung des Wassergehalts ist wünschenswert, weil sie die Glashaftung zusätzlich erniedrigt. Damit bei der Verarbeitung keine Blasenbildung eintritt, sollte die angegebene Wasserkonzentration aber nicht überschritten werden.

Bei der Glasverbundherstellung wird die Folie beispielsweise zwischen 1–3 mm starke Glasscheiben gelegt und bei 60–100 °C zu einem Vorverbund verpresst. Daraus wird z.B. in einem Autoklaven bei 120–160 °C und 8–16 bar der Endverbund hergestellt. Bei den in den Beispielen beschriebenen Versuchen wurden die Glasplatten vor der Verbundherstellung mit entsalztem Wasser gewaschen.

Zur Qualitätsprüfung kann der Verbund einem umfangreichen Testprogramm unterworfen werden.

Zur Beurteilung der Verbundqualität, insbesondere der Glashaftung, wird häufig der sogenannte Pummeltest herangezogen. Dabei wird ein Glasverbund auf −18 °C abgekühlt, auf eine Metallunterlage gelegt und mit einem 500 g schweren Hammer zerschlagen. Entsprechend der Glasmenge, die sich dabei von der Folie löst, wird der Verbund mit Pummelwerten zwischen 0 (keine Haftung) und 10 (vollständige Haftung) bewertet. Eine ausführliche Beschreibung des Tests findet sich in der GB-PS 1 093 864.

Sehr gut lässt sich die Glashaftung mit einem Schertest ermitteln, der in der DE-OS 3 038 449 ausführlich beschrieben ist. Bei den in*) Messungen wurden Verbundstreifen aus 3 mm starkem, mit entsalztem Wasser gewaschenen Floatglas und Polyvinylbutyralfolien der in den Beispielen angegebenen Dicke verwendet. Die Streifen hatten eine Abmessung von ca. 100 × 15 mm, die zu scherende Verbundfläche, die vor jedem Zugversuch genau ausgemessen wurde, von ca. 15 × 7 mm. *) den nachstehenden Beispielen durchgeführten.

Die Verbundstreifen wurden in einem handelsüblichen Gerät der Firma Instron mit einer Geschwindigkeit von 20 cm/min. gerissen.

Die optimale Scherfestigkeit, deren Einstellung zu schlagfesten Glasverbunden führt, liegt im allgemeinen zwischen 1,5 und 5 N/mm², vorzugsweise zwischen 2 und 4 N/mm². Ein besonders bevorzugter Bereich liegt zwischen 2,5 und 3,5′ N/mm². Hochfeste Folien können dabei unbeschadet etwas höhere Scherfestigkeiten aufweisen als weniger feste Folien. Dies verringert gleichzeitig die Gefahr des Absplitterns von Glas beim Bruch.

Die für die Praxis wichtigste Testmethode ist der Kugelfalltest nach DIN 52306 (dynamische Methode). Hierzu werden ca. 30 × 30 cm grosse Glasverbunde aus zwei 3 mm starken Floatglasscheiben und 0,76 mm bzw. 0,6 mm starken, weichmacherhaltigen Polyvinylbutyralfolien hergestellt. Von den Verbunden wird mit einer 2,26 kg schweren Stahlkugel die mittlere Bruchhöhe bestimmt, das ist die Höhe, bei der die Hälfte der geprüften Scheiben durchschlagen wird.

Die Erfindung wird durch die nachfolgenden Beispiele näher erläutert.

Beispiel 1

Proben eines Polyvinylbutyrals mit einem Anteil an Vinylalkoholeinheiten von 22,5 Gew.-% wurden mit 29 Gew.-% (bezogen auf die Polymerisat/Weichmacher-Mischung) eines Triglykolesters von aliphatischen $C_6$–$C_9$-Carbonsäuren bei 170 °C sowie bei 240 °C extrudiert, wobei die in der Tabelle 1 angegebenen Antihaftmittel in den angegebenen Mengen zuvor auf das eingesetzte Polymerisat aufgetrocknet worden waren. Als Thermostabilisator wurden 0,1 Gew.-% (bezogen auf die Polymerisat/Weichmacher-Mischung) Ditert.-butyl-p-kresol zugesetzt. Aus den so hergestellten Polymerisat/Weichmachergemischen wurden 0,8 mm starke Folien gepresst und aus diesen Folien und 3 mm starken Floatglasscheiben 30 × 30 cm grosse Glasverbunde hergestellt. Eine Ausprüfung dieser Verbunde brachte die in der Tabelle 1 zusammengefassten Ergebnisse.

Wie die Scherfestigkeiten der Vergleichsproben a) bis d) zeigen, besitzen die aus den bei 240 °C extrudierten Materialien hergestellten Folien deutlich höhere Scherfestigkeiten als die aus den gleichen, aber bei 170 °C extrudierten Materialien hergestellten Folien. Im Gegensatz hierzu weichen bei den erfindungsgemässen Proben e) bis g) nach erfolgter Extrusion der Materialien bei 170 °C bzw. 240 °C die Scherfestigkeiten der aus den extrudierten Materialien hergestellten Folien nur ganz unerheblich voneinander ab. Ähnlich vorteilhafte Ergebnisse und damit eine deutliche Überlegenheit gegenüber den Vergleichsproben a) bis d) zeigten die erfindungsgemässen Proben e) bis g) auch beim Pummeltest.

Das Ergebnis der Tabelle 1 demonstriert somit eindeutig die ausgeprägte Temperaturunempfindlichkeit erfindungsgemässer Antihaftmittelsysteme vergleichsweise zu der alleinigen Verwendung von Betainen.

Beispiel 2

Gleiches Polyvinylbutyral wie in Beispiel 1 beschrieben wurde in analoger Weise wie dort angegeben bei 170 °C extrudiert und zu Folien verpresst. Als Weichmacher wurden 29 Gew.-% (bezogen auf die Polymerisat/Weichmacher-

Tabelle 1

| Probe | Antihaftmittel (bez. auf Polymerisat) Kaliumformiat (Alkalititer) | Betain (Gew.-%) | Scherfestigkeit ($N/mm^2$) Extrusion: 170 °C | 240 °C | Pummel 170 °C | 240 °C |
|---|---|---|---|---|---|---|
| a) Vergleich | – | 0,15 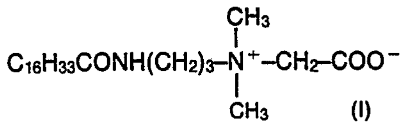 (I) | 2,8 | 3,9 | 4 | 6 |
| b) Vergleich | – | 0,15 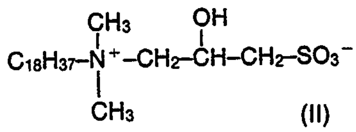 (II) | 2,5 | 3,3 | 3 | 5 |
| c) Vergleich | – | 0,04 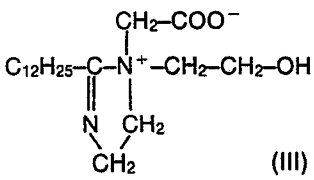 (III) | 1,8 | 2,9 | 0–1 | 4 |
| d) Vergleich | – | 0,14 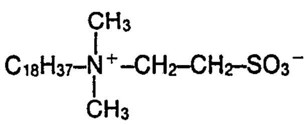 | 2,9 | 3,9 | 5 | 7 |
| e) | 50 | 0,07 I | 2,8 | 2,9 | 4 | 4 |
| f) | 35 | 0,025 II | 2,7 | 2,8 | 4 | 4 |
| g) | 60 | 0,03 III | 2,3 | 2,7 | 3 | 4 |

Mischung) Triethylenglykoldiheptansäureester eingesetzt sowie die in der folgenden Tabelle 2 aufgeführten Antihaftmittel in den angegebenen Mengen. Aus den Folien wurden wie in Beispiel 1 beschrieben Glasverbunde hergestellt.

Das Ergebnis der in Tabelle 2 wiedergegebenen Versuchsreihe zeigt, dass zur vergleichbaren Haftungseinstellung mit Kaliumacetat allein so hohe Antihaftmittelmengen eingesetzt werden müssen, dass sich die Folie deutlich verfärbt.

Tabelle 2

| Probe | Antihaftmittel (bezogen auf Polymerisat) Kaliumacetat (Alkalititer) | III (vgl. Tab. 1) (Gew.-%) | Scherfestigkeit ($N/mm^2$) | Mittl. Bruchhöhe (m) | Farbzahl +) |
|---|---|---|---|---|---|
| a) | 60 | 0,015 | 3,2 | 6,4 | 2 |
| b) | 80 | 0,015 | 2,9 | 6,6 | 2 |
| c) | 170 | 0,015 | 2,7 | 6,5 | 3 |
| d) | 60 | 0,007 | 3,6 | 5,8 | 2 |
| e) Vergl. | 170 | – | 4,0 | 5,5 | 3 |
| f) Vergl. | 240 | – | 3,7 | 6,2 | 5 |

+) gemäss DE-PS 2 208 167: 0 = nicht verfärbt 10 = hellbraun

Beispiel 3

Ein Polyvinylbutyral mit einem Gehalt an Vinylalkoholeinheiten von 24,2 Gew.-% wurde in einem Brabenderkneter 10 Minuten bei 150 °C mit 29 Gew.-% (bezogen auf die Polymerisat/Weichmacher-Mischung) eines Weichmachers verknetet, der sich aus 80 Gew.-% Triethylenglykolheptansäureester und 20 Gew.-% Trioctylphosphat zusammensetzte. Die in der Tabelle 3 angegebenen Antihaftmittel wurden jeweils kurz vor der Verarbeitung unter Rühren in 5 gew.-%iger methanolischer Lösung zum Weichmacher gegeben. Aus den verkneteten Proben wurden 0,76 mm starke Folien gepresst und aus diesen nach Klimatisierung Verbunde mit 3 mm starken Floatglasscheiben hergestellt. In der Tabelle 3 sind die Prüfergebnisse zusammengefasst.

Tabelle 3

| Probe | Antihaftmittel (bezogen auf Polymerisat) Kaliumformiat (Alkalititer) | Kaliumacetat (Alkalititer) | Betain (Gew.-%) | Farbzahl | Scherfestigkeit ($N/mm^2$) |
|---|---|---|---|---|---|
| a) | – | 72 | 0,07 III$^{+)}$ | 1–2 | 3,6 |
| b) | 84 | – | 0,14 $(CH_3)_3$-$N^+$-$CH_2COO^-$ | 1–2 | 2,9 |
| c) | 84 | – | 0,06 II$^{+)}$ | 1–2 | 3,8 |
| d) Vergl. | – | 215 | – | 3 | 5,2 |
| e) Vergl. | 135 | – | – | 2–3 | 4,1 |

($^{+)}$ vgl. Tabelle 1)

Die Versuchsergebnisse zeigen die Überlegenheit der erfindungsgemässen Antihafteinstellungen (Proben a bis c), womit bei geringerer Verfärbung günstigere Scherfestigkeiten erhalten wurden als bei alleiniger Verwendung von Kaliumsalzen (Proben d und e).

Beispiel 4

Eine methanolische Lösung von 5 Gew.-% Kaliumformiat und 5 Gew.-% III (vgl. Tabelle 1) wurde unter Rühren als Antihaftmittel zu einer Weichmacherkombination aus Triethylenglykoldiheptansäureester/Trioctylphosphat 8:2 gegeben. Mit dieser Mischung wurde ein Polyvinylbutyral mit einem Gehalt an Vinylalkoholeinheiten von 23,6 Gew.-% (bezogen auf das Polymerisat) zu einer 0,76 mm starken Folie extrudiert. Deren Weichmachergehalt betrug 30 Gew.-% (bezogen auf die Weichmacher-Mischung), der eingestellte Alkalititer betrug 70 und der Betaingehalt 0,06 Gew.-% (jeweils bezogen auf das Polymerisat).

Glasverbunde, hergestellt wie in Beispiel 1 beschrieben, aus dieser Folie waren klar, hatten eine Scherfestigkeit von 3,8 $N/mm^2$ und eine mittlere Bruchhöhe von 7,3 m.

Beispiel 5

Eine weichgemachte 0,76 mm starke Polyvinylbutyralfolie enthielt 63 Gew.-% eines Polyvinylbutyrals mit einem Anteil an Vinylalkoholeinheiten von 24,2 Gew.-%, bezogen auf das Polymerisat, und 37 Gew.-% Trioctylphosphat als Weichmacher. Das Antihaftsystem setzte sich zusammen aus Kaliumformiat entsprechend dem Alkalititer 55 und 0,015 Gew.-% III (vgl. Tabelle 1), jeweils bezogen auf das Polymerisat. Die Scherfestigkeit der Folie im Glasverbund lag bei 3,3 $N/mm^2$ und die mittlere Bruchhöhe der Verbunde bei 5,5 m. In Abwesenheit von Antihaftmittel hatte ein auf gleiche Weise hergestellter Verbund eine Scherfestigkeit von 7,5 $N/mm^2$ und eine mittlere Bruchhöhe von 2,8 m.

Beispiel 6

Wie in Beispiel 3 beschrieben, wurde ein Polymerisat/Weichmachergemisch in Gegenwart von Antihaftmitteln im Brabenderkneter statt 10 Minuten bei 150 °C nunmehr 20 Minuten bei 170 °C verarbeitet. Als Polymerisat wurden 65 Gew.-% eines Polyvinylbutyrals mit einem Anteil an Vinylalkoholeinheiten von 26,0 Gew.-%, bezogen auf das Polymerisat, und als Weichmacher 35,0 Gew.-% (bezogen auf das Polymerisat/Weichmacher-Gemisch) einer Mischung aus 20 Gew.-% Dihexylphthalat und 80 Gew.-% Trioctylphosphat verwendet. Die Antihaftmittel wurden wie in Beispiel 3 beschrieben dem Weichmacher zugesetzt. Die Versuchsergebnisse zeigt die folgende Tabelle 4.

Tabelle 4

| Probe | Antihaftmittel (bezogen auf Polymersiat) Kaliumacetat (Alkalititer) | Betain (Gew.-% III$^{+)}$) | Farbzahl | Reissfestigkeit ($N/mm^2$) | Scherfestigkeit ($N/mm^2$) |
|---|---|---|---|---|---|
| a) | 157 | 0,07 | 10 (hellbraun) | 25,5 | 3,4 |
| b) Vergl. | 314 | – | 15 (dunkelbraun) | 23,5 | 6,0 |

($^+$ vgl. Tabelle 1)

Bei den in Beispiel 6 gewählten härteren Verarbeitungsbedingungen (höhere Temperatur, längere Verweilzeit als in Beispiel 3) führt das konventionelle Antihaftmittel (Probe b) zu stärkerer Verfärbung bei nicht ausreichender Antihaftwirkung (d.h. zu hoher Scherfestigkeit) – im Gegensatz zum erfindungsgemässen Antihaftsystem (Probe a).

Beispiel 7

Auf ein Polyvinylbutyral mit einem Anteil an Vinylalkoholeinheiten von 22,5 Gew.-%, bezogen auf das Polymerisat, wurden die in der folgenden Tabelle 5 angegebenen Antihaftmittel aus wässriger Lösung aufgetrocknet. Anschliessend wurde das Polymerisat zusammen mit 29,5 Gew.-% (bezogen auf das Polymerisat/Weichmacher-

Gemisch) Triethylenglykol-bis-2-ethylbuttersäureester in einem Brabenderkneter 20 Minuten mit 50 Umdrehungen pro Minute bei 170 °C verknetet. Aus dem Polymerisat/Weichmacher-Gemisch wurden in bekannter Weise 0,76 mm starke Verbundfolien gepresst und daraus Glasverbunde hergestellt. Die folgende Tabelle 5 zeigt die Ergebnisse der Ausprüfung. Am auffälligsten wird die Beeinträchtigung der zwischenmolekularen Kräfte durch Alkali erkennbar, wenn man die Fliessfähigkeit des Polymerisat/Weichmacher-Gemisches bei relativ niederen Temperaturen misst. Im vorliegenden Fall geschah das durch Bestimmung des Schmelzindex (analog DIN 53735) bei 80 °C unter 20 kg Last. Neben der Erhöhung der Fliessfähigkeit zeigt insbesondere der Vergleichsversuch c) die Beeinträchtigung der Festigkeit und eine Zunahme der Verfärbung. Ähnliche Ergebnisse wurden erhalten, wenn Kaliumhydroxid durch Kaliumacetat ersetzt wurde.

Tabelle 5

| Probe | Antihaftmittel (bezogen auf Polymerisat) KOH (Alkalititer) | $^{+}N(CH_3)_3–CH_2–COO^{-}$ (Gew.-%) | Schmelzindex $i_{20}$ 80 °C (mg/Std.) | Farbzahl | Festigkeit bei 100% Dehnung (N/mm²) | Scherfestigkeit (Verbund) (N/mm²) |
|---|---|---|---|---|---|---|
| a) Vergl. | 50 | – | 110 | 7 | 3,5 | 7,5 |
| b) | 50 | 0,025 | 120 | 6 | 3,4 | 2,8 |
| c) Vergl. | 240 | – | 430 | 11 | 2,8 | 3,2 |

Beispiel 8

Verschiedene weichgemachte Polyvinylbutyralfolien wurden durch Extrusion bei 190 °C in einer Stärke von 0,76 mm hergestellt. Die Zusammensetzung der Folien, die verwendeten Antihaftmittel sowie Eigenschaften der Folien und daraus hergestellter Glasverbunde sind aus der folgenden Tabelle 6 ersichtlich.

Tabelle 6

| | Vinylalkoholeinheiten im Polymerisat (Gew.-%) | Weichmacher: n-Heptansäuretriglykolester-Anteil (Gew.-%, bez. auf weichgem. Mischung) | Antihaftmittel (bez. auf Polymerisat): Kaliumacetat (Alkalititer) | III⁽⁺⁾ (Gew.-%) | Festigkeit bei 100% Dehnung ($N/mm_2$) | Scherfestigkeit ($N/mm_2$) | Mittlere Bruchhöhe (m) |
|---|---|---|---|---|---|---|---|
| a) Vergl. | 19,5 | 29 | 80 | 0,028 | 1,9 | 1,7 | 5,80 |
| b) | 21,9 | 29 | 80 | 0,028 | 3,5 | 2,9 | 6,60 |
| c) | 21,9 | 29 | 20 | 0,035 | 3,5 | 3,3 | 6,90 |

(⁽⁺⁾ vgl. Tabelle 1)

Es ist zu erkennen, dass bei gleich hohem Weichmachergehalt Polymerisate mit niederem Anteil an Vinylakoholeinheiten weniger fest sind (Probe a) als Polymerisate mit hohem Vinylalkoholanteil (Proben b und c). Diesen Nachteil kann man z.B. durch Erniedrigung des Weichmachergehaltes der Folien ausgleichen, was aber zu einer Verschlechterung der Verarbeitbarkeit führt und unwirtschaftlich ist.

Beispiel 9

Das Beispiel zeigt die erfindungsgemässe Antihaftwirkung des Systems Lecithin/Kaliumformiat an Polyvinylbutyralfolien aus verschiedenen Polymerisaten und Weichmachern. Die Folien aus den Proben a bis d waren einheitlich 0,76 mm stark. Die Zusammensetzung der Folien ist aus der Tabelle 7 zu entnehmen.

Beispiel 10

Eine 0,6 mm starke Folie aus Polyvinylbutyral mit einem Anteil von 22,6 Gew.-% Vinylalkoholeinheiten, bezogen auf das Polymerisat, 28 Gew.-% eines Weichmachers, bezogen auf das Polymerisat/Weichmacher-Gemisch, aus Triethylenglykol-bis-2-ethylbuttersäureester/Trioctylphosphat 9:1 sowie einem Zusatz von Kaliumformiat entsprechend einem Alkalititer 25, und 0,033 Gew.-% III (vgl. Tabelle 1), jeweils bezogen auf das Polymerisat, wurde zu einem Glasverbund verarbeitet, der eine Scherfestigkeit von 2,9 N/mm² und eine mittlere Bruchhöhe von 5,55 m zeigte. In Abwesenheit der Antihaftmittel ergab ein vergleichsweise hergestellter Verbund aus denselben Komponenten dagegen eine Scherfestigkeit von 9,1 N/mm² und eine mittlere Bruchhöhe von 1,50 m. Nach einer Lagerdauer von einem Jahr im Freien zeigte der erfindungsgemässe Verbund an den Kanten keine Ablösung der Folie.

Tabelle 7

| Vinylalkohol-einheiten im Polymerisat (Gew.-%) | Weichmacher+) in der Folie (Gew.-%) | Antihaftmittel (bez. auf Polymerisat) Kaiumformiat (Alkalititer) | Sojalecithin (Gew.-%) | Scherfestigkeit (N/mm2) | Mittlere Bruchhöhe (m) |
|---|---|---|---|---|---|
| a) 22,5 | 32 DBP | 20 | 0,03 | 1,7 | 6,30 |
| b) 23,2 | 35 DHP/TOF 7:3 | 28 | 0,04 | 2,4 | 6,10 |
| c) 22,2 | 31 BB | 20 | 0,03 | 2,3 | 5,90 |
| d) 24,0 | 31 DO/TOF 6:4 | 58 | 0,05 | 2,2 | 7,20 |

+) DBP = Dibutylphthalat,
DHP = Dihexylphthalat,
DOP = Dioctylphthalat,
TOF = Trioctylphosphat,
BB = Butylbenzylphthalat

**Patentansprüche**

1. Verfahren zur Reduzierung der Glashaftung von thermoplastischen, weichmacherhaltigen Polyvinylbutyralformmassen, deren Polyvinylbutyralkomponente 21–28 Gew.-% Vinylalkoholeinheiten (bezogen auf Polyvinylbutyral) enthält, durch Vermischen der Formmassenbestandteile mit einem Antihaftmittel aus der Gruppe alkalische Metallverbindungen und Betaine, dadurch gekennzeichnet, dass man als Antihaftmittel eine Kombination aus

a) Kaliumhydroxid, Kaliumformiat oder Kaliumacetat in einer Menge entsprechend einem Alkalititer zwischen 10 und 200 (bezogen auf Polyvinylbutyral) und

b) 0,005 bis 0,5 Gew.-% (bezogen auf Polyvinylbutyral) einer Verbindung mit Betainstruktur einsetzt.

2. Verfahren nach Anspruch 1, dadurch gekennzeichnet, dass man als Komponente b) Betaine, Sulfobetaine, Phosphobetaine oder Gemische aus diesen Verbindungen einsetzt.

3. Verfahren nach Ansprüchen 1 und 2, dadurch gekennzeichnet, dass die Mischung aus Formmassenbestandteilen und Antihaftmittel zu einer Folie verpresst wird.

4. Weichmacherhaltige Polyvinylbutyralfolien mit reduzierter Glashaftung herstellbar nach Anspruch 3.

5. Verwendung der weichmacherhaltigen Polyvinylbutyralfolien nach Anspruch 4 zur Herstellung von Glasverbunden.

6. Glasverbunde, enthaltend weichmacherhaltige Polyvinylbutyralfolie nach Anspruch 4 als Verbundschicht.

**Claims**

1. A method of reducing the adhesion to glass of thermoplastic polyvinylbutyral moldin compositions which contain plasticizer and in which the polyvinylbutyral component contains 21–28% by weight of vinyl alcohol units (based on the polyvinylbutyral), by mixing the molding composition constituents with an anti-adhesive agent from the group of alkaline metal compounds and betaines, which comprises using, as the anti-adhesive agent, a combination of

a) potassium hydroxide, potassium formate or potassium acetate in an amount corresponding to an alkali titer of between 10 and 200 (based on the polyvinylbutyral) and

b) 0.005 to 0.5% by weight (based on the polyvinylbutyral) of a compound having a betaine structure.

2. The method as claimed in claim 1, wherein a betaine, sulfobetaine or phosphobetaine or a mixture of these compounds is used as component b).

3. The method as claimed in claim 1 or 2, wherein the mixture of the molding-composition constituents and the anti-adhesive agent is pressed to give a film.

4. A polyvinylbutyral film which contains a plasticizer, has reduced adhesion to glass and can be produced as claimed in claim 3.

5. The use of the polyvinylbutyral films which contains a plasticizer as claimed in claim 4, for the production of a glass laminate.

6. A glass laminate containing a polyvinylbutyral film which contains a plasticizer as claimed in claim 4, as the bonding layer.

**Revendications**

1. Procédé pour diminuer l'adhérence au verre de matières thermoplastiques à base de poly-(vinylbutyral) plastifiées dont la composante poly-(vinylbutyral) contient de 21 à 28% en poids de motifs d'alcool vinylique (par rapport au poly-(vinylbutyral)), par mélangeage des constituants de la matière à mouler avec un agent anti-adhérence pris dans l'ensemble constitué par les composés alcalins de métaux et les bétaïnes, procédé caractérisé en ce qu'on utilise, comme agent anti-adhérence, une association:

a) d'hydroxyde de potassium, de formiate de potassium ou d'acétate de potassium en une quantité correspondant à un titre alcalin compris entre 10 et 200 (par rapport au poly-(vinylbutyral)), et

b) de 0,005 à 0,5% en poids (par rapport au

poly-(vinylbutyral)) d'un composé à structure bétaïnique.

2. Procédé selon la revendication 1 caractérisé en ce qu'on utilise, comme composante b), des bétaïnes, des sulfo-bétaïnes, des phosphobétaïnes ou des mélanges de ces composés.

3. Procédé selon l'une des revendications 1 et 2 caractérisé en ce qu'on moule le mélange formé des constituants de la matière à mouler et de l'agent anti-adhérence de manière à en faire une feuille.

4. Feuilles à base de poly-(vinylbutyral) contenant un plastifiant et ayant une adhérence au verre réduite, qui peuvent être préparées selon la revendication 3.

5. Application des feuilles à base de poly-(vinylbutyral) contenant un plastifiant, selon la revendication 4, pour la fabrication de verres composites.

6. Verres composites qui contiennent, comme couche de liaison, une feuille à base de poly-(vinylbutyral) contenant un plastifiant selon la revendication 4.